# FASCICULE DE BREVET EUROPEEN

(11) **EP 4 101 766 B1**
(45) Date de publication et mention de la délivrance du brevet: **03.04.2024**
(21) Numéro de dépôt: 22177288.2
(22) Date de dépôt: 03.06.2022
(51) Int. Cl.: B64D 11/06, B60N 2/015, B60N 2/22

(54) **SIÈGE D'AÉRONEF COMPRENANT UN DOSSIER AJUSTABLE**
LUFTFAHRZEUGSITZ MIT EINER VERSTELLBAREN RÜCKENLEHNE
AIRCRAFT SEAT COMPRISING AN ADJUSTABLE BACKREST

(30) Priorité: 08.06.2021 FR 2106038
(43) Date de publication de la demande: 14.12.2022
(73) Titulaire: Expliseat, 75011 Paris (FR)
(72) Inventeur: SAADA, Benjamin, 75005 PARIS (FR); LAUNAY, Julie, 94210 SAINT-MAUR-DES-FOSSES (FR); TEJEDOR, Vincent, 92130 Issy les Moulineaux (FR)
(74) Mandataire: Brevalex

(56) Documents cités:
- EP-A1- 1 947 007
- DE-A1-102010 033 752

## Description

### DOMAINE TECHNIQUE

L'invention concerne un siège d'aéronef comprenant une assise et un dossier porté par cette assise, dans lequel l'inclinaison du dossier est ajustable au besoin par l'occupant de ce siège, entre une inclinaison minimale et une inclinaison maximale.

### ÉTAT DE LA TECHNIQUE ANTÉRIEURE

Dans les systèmes connus, le siège comporte une armature inférieure intégrée dans son assise et qui est fixée au sol, et une armature supérieure intégrée dans le dossier et comportant une portion basse par laquelle elle est rigidement solidarisée à l'armature inférieure. Ces armatures sont typiquement des éléments métalliques assemblés les uns aux autres pour former un tout rigide.

L'armature supérieure comporte une poutre secondaire transversale, située au-dessus de la portion par laquelle elle est solidarisée à l'armature inférieure. Cette poutre secondaire qui est située sensiblement à hauteur de la région lombaire d'un occupant du siège sépare le dossier en une portion haute dont l'inclinaison est ajustable et une portion basse fixe.

La portion haute du dossier est articulée sur la poutre secondaire par un mécanisme intégrant une articulation et un vérin qui peut être désactivé en enfonçant un bouton prévu à cet effet, ce qui permet d'ajuster l'inclinaison et de la bloquer à la valeur souhaitée. Ce mécanisme autorise de plus le redressement du dossier si l'on exerce sur sa face arrière un effort supérieur à une valeur seuil. Le document DE102010033752 divulgue un siège destiné à être fixé au plancher d'un véhicule selon la préambule de la revendication 1.

D'une manière générale, les mécanismes connus nécessitent pour le blocage du dossier des composants présentant une masse élevée qui est pénalisante pour un siège d'aéronef.

Le but de l'invention est d'apporter une solution permettant d'assurer la fonction d'ajustement de l'inclinaison du dossier tout en minimisant l'augmentation de la masse du siège.

### EXPOSÉ DE L'INVENTION

A cet effet, l'invention a pour objet un siège destiné à être fixé au plancher d'un véhicule, comportant une assise intégrant une armature inférieure, et un dossier intégrant une armature supérieure liée à l'armature inférieure, l'inclinaison de ce dossier étant ajustable entre une inclinaison minimale et une inclinaison maximale, ce siège comprenant :
- une liaison pivot portée par une poutre transversale arrière de l'armature inférieure et par laquelle l'armature supérieure est liée à l'armature inférieure ;
- un bras rigidement solidaire de l'armature supérieure et comportant une extrémité avant ;
- un organe de blocage de type à crémaillère porté au moins en partie par une poutre transversale avant de l'armature inférieure, et pouvant être dans un état enclenché pour bloquer l'extrémité avant à sa position courante ou dans un état désenclenché pour libérer l'extrémité avant.

Grâce au bras, les efforts auxquels l'organe de blocage est soumis lorsque l'occupant du siège s'adosse au dossier sont réduits, de sorte que le dimensionnement de cet organe de blocage est diminué, ce qui permet de réduire sa masse.

L'invention concerne également un siège ainsi défini, dans lequel l'organe de blocage comporte d'une part une bague entourant la poutre transversale avant et portant un levier de liaison, ce levier de liaison portant un chariot mobile en translation le long du levier de liaison, l'extrémité avant du bras étant liée au chariot par une liaison pivot, et d'autre part un indexeur porté par l'armature inférieure et pouvant être dans un état enclenché pour bloquer en rotation la bague ou dans un état désenclenché pour libérer la bague.

L'invention concerne également un siège ainsi défini, comprenant des moyens de rappel élastiques du chariot vers une extrémité libre du levier de liaison.

L'invention concerne également un siège ainsi défini, dans lequel l'indexeur comprend un coulisseau pourvu d'une denture, ce coulisseau étant mobile entre une position enclenchée dans laquelle la denture est engrenée dans un secteur denté porté par la bague, et une position désenclenchée dans laquelle la denture est dégagée du secteur denté.

L'invention concerne également un siège ainsi défini, comprenant des moyens de rappel élastiques rappelant le coulisseau vers sa position désenclenchée.

L'invention concerne également un siège ainsi défini, dans lequel les dents de la denture du coulisseau et les dents du secteur denté ont des profils de dentures asymétriques dimensionnés pour assurer un blocage de la bague lorsque l'indexeur est enclenché et qu'une poussée est exercée sur le dossier pour augmenter son inclinaison, et pour engendrer un désengagement de l'indexeur lorsqu'une poussée suffisante est exercée sur le dossier pour réduire son inclinaison.

L'invention concerne également un siège ainsi défini, comprenant un levier de commande pour désengager temporairement le coulisseau à l'encontre des moyens de rappel élastiques.

### BRÈVE DESCRIPTION DES DESSINS

La Figure 1 est une vue schématique en perspective d'un siège d'aéronef selon l'invention ;
La Figure 2 est une vue latérale d'une armature d'assise de siège selon l'invention montrant le mécanisme d'ajustement de l'inclinaison lorsque l'inclinaison du dossier est minimale ;
La Figure 3 est une vue latérale d'une partie du mécanisme montrant l'organe d'ajustement à l'état bloqué lorsque le dossier a une inclinaison minimale ;
La Figure 4 est une vue latérale d'une partie du mécanisme montrant l'organe de blocage à l'état débloqué lorsque le dossier a une inclinaison minimale ;
La Figure 5 est une vue latérale d'une armature d'assise de siège selon l'invention montrant le mécanisme d'ajustement de l'inclinaison lorsque le dossier a une inclinaison maximale ;
La Figure 6 est une vue de détail d'une denture et d'un secteur denté du siège selon l'invention.

### EXPOSÉ DÉTAILLÉ DE MODES DE RÉALISATION PARTICULIERS

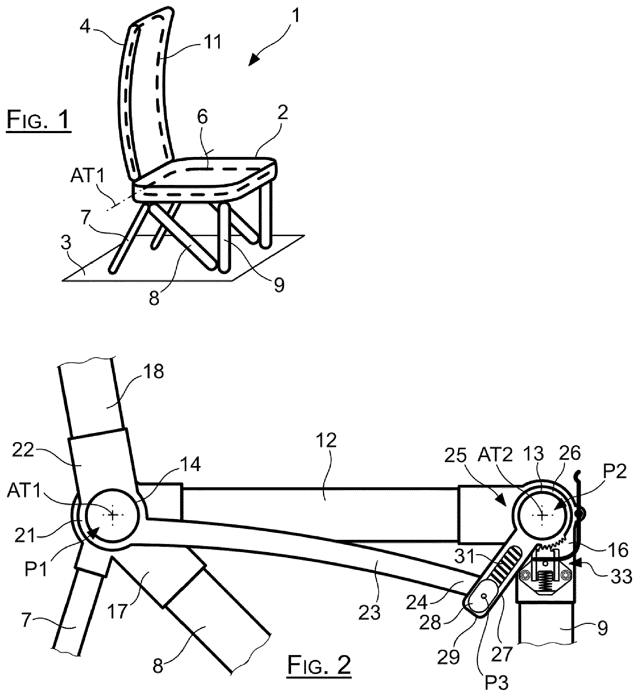

Sur la figure 1, un siège 1 d'aéronef comporte une assise 2 fixée à un plancher 3 et portant un dossier 4. L'assise 2 comporte une armature inférieure 6 formée de poutres assemblées pour constituer un cadre auquel sont fixées des pièces de tissus formant l'assise proprement dite, et des pieds 7, 8, 9 par l'intermédiaire desquels cette assise 2 est rigidement solidarisée au plancher 3.

Le dossier 4 comporte une armature supérieure 11 portant des pièces de tissus, et qui est portée par l'armature inférieure 6 de l'assise par l'intermédiaire d'attaches. Ces attaches assurent le maintien du dossier 4 tout en permettant à l'occupant du siège d'ajuster l'inclinaison de ce dossier 4 à une valeur souhaitée.

Comme visible sur la figure 2, l'armature inférieure 6 comporte une poutre latérale 12 s'étendant longitudinalement, raccordée à une poutre transversale avant 13 et à une poutre transversale arrière 14, ainsi qu'une autre poutre latérale opposée à la poutre 13, non visible sur la figure 2 et qui est elle aussi raccordée aux extrémités opposées des poutres transversales 13 et 14.

Ces quatre poutres sont ainsi disposées selon un agencement rectangulaire, auquel sont raccordés les pieds 7-9 assurant le maintien de l'ensemble sur le plancher 3.

Ces poutres sont des éléments tubulaires rigidement solidarisés les uns aux autres par des organes de raccordement. Comme visible sur la figure 2, la poutre latérale 12 a son extrémité avant rigidement solidarisée à une extrémité de la poutre 13 et à une extrémité supérieure du pied 9 par un organe de raccordement avant 16. D'une manière analogue, cette poutre 12 a son extrémité arrière rigidement solidarisée à la poutre 14 et aux extrémités supérieures des pieds 7 et 8 par un autre organe de raccordement arrière 17.

L'armature supérieure 11 a une forme générale correspondant à celle de la lettre U selon une configuration inversée, la base du U étant située au sommet du dossier, les branches du U constituent les montants latéraux de ce dossier, les extrémités inférieures de ces branches étant situées en partie basse du dossier pour être raccordées à l'armature inférieure dans sa région arrière.

L'extrémité basse 18 de la branche droite de l'armature supérieure 11, qui apparait sur la figure 2, est solidarisée à l'extrémité droite de la poutre arrière 14 par l'intermédiaire d'une attache 19 pour être reliée à cette poutre 14 par une liaison pivot P1 d'axe transversal, afin d'autoriser l'ajustement de l'inclinaison du dossier.

L'attache 19 comporte une bague 21 entourant la poutre 14 en étant montée autour de celle-ci selon un ajustement glissant lui permettant de tourner librement autourde cette poutre 14, en constituant la liaison pivot P1. Cette bague porte un manchon 22 s'étendant radialement par rapport à son axe de rotation, et dans lequel l'extrémité 18 est engagée.

Le dossier est ainsi apte à pivoter autour d'un axe transversal AT1 coïncidant avec la poutre arrière 14, pour que son occupant puisse ajuster l'inclinaison.

L'attache 19 comporte également un bras 23, rigidement solidaire de la bague 21 et qui s'étend radialement vers l'organe avant 16, en longeant sensiblement la poutre latérale 12. L'extrémité avant 24 de ce bras 23 est reliée à un organe de blocage 25 à crémaillère porté par une extrémité droite de la poutre avant 13 qui dépasse de l'organe 16.

Cet organe de blocage 25 comporte une bague 26 entourant la poutre 13 en étant montée selon un ajustement glissant pour lui permettre de tourner autour de cette poutre, afin de constituer une autre liaison pivot P2. Cette bague porte un levier de liaison 27 rigidement solidaire de la bague 26 et s'étendant radialement par rapport à celle-ci tout en étant relié à une extrémité avant du bras 23. Cet organe de blocage 25 est ainsi apte à pivoter autour d'un axe transversal AT2 correspondant à l'axe de la poutre avant 13.

Comme visible sur la figure 2, le levier 27 porte un chariot 28 libre de glisser le long de ce levier 27, c'est-à-dire radialement par rapport à l'axe AT2, tout en étant rappelé vers l'extrémité libre 29 de ce levier 27 par un ressort de rappel 31. L'extrémité avant du bras 23 est reliée au chariot 28 par une liaison pivot P3 orientée selon un axe transversal parallèle aux axes AT1 et AT2.

Le bras 23 qui s'étend radialement par rapport à l'axe AT1 est plus court que la poutre 12. Il longe la poutre 12 en s'en écartant pour avoir son extrémité avant décalée vers le bas par rapport à cette poutre 12 dans la situation de la figure 2.

Le levier 27 s'étend radialement par rapport à l'axe AT2 en ayant une orientation oblique dirigée vers le bas et coïncidant sensiblement avec la bissectrice de la poutre 12 qui est horizontale et du pied 9 qui est vertical. La poutre 12, le bras 23 et le levier 27 sont ainsi agencés selon un triangle dont la poutre 12 constitue le plus long côté, le sommet opposé à cette poutre correspond au chariot 28 et est situé sous la poutre 12.

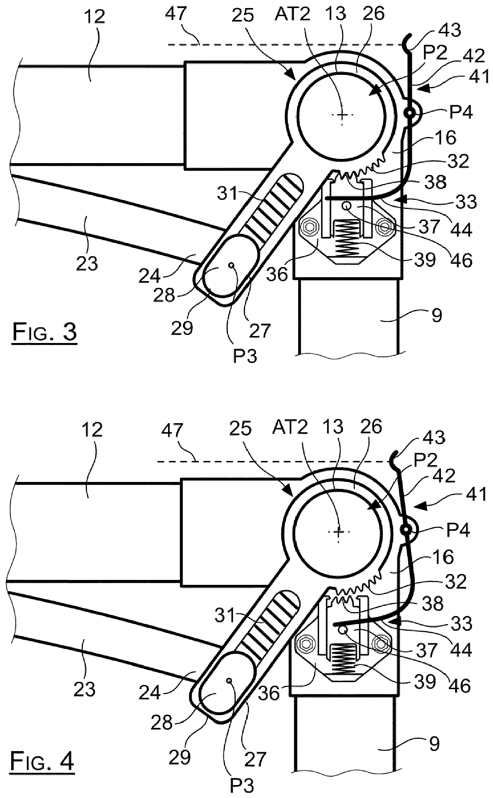

Comme visible plus clairement sur la figure 3, la bague 26 de l'organe de blocage 25 possède à sa face externe un secteur denté 32 permettant à un indexeur 33 d'assurer le blocage en rotation de l'ensemble de l'organe de blocage 25.

D'une manière générale, l'organe de blocage 25 est apte à pivoter autour de la poutre 13 sur une amplitude qui est de l'ordre de 30 degrés, et son secteur denté 32 est situé dans une région inférieure de la bague 26.

L'indexeur 33 est situé en vis-à-vis du secteur denté 32, en étant porté par un manchon 34 de l'organe de raccordement 16 recevant le pied avant 9. Il comporte un socle 36 fixé à ce manchon, et ce socle 36 porte un coulisseau 37 mobile verticalement en translation, c'est-à-dire parallèlement au pied 9. L'extrémité supérieure de ce coulisseau 37 comporte une denture 38 apte à être engagée dans le secteur denté 32 ou bien à en être désengagé, afin de former conjointement un système d'indexation ou de blocage à crémaillère.

Ce coulisseau 37 est continuellement poussé vers le secteur denté 32 par un ressort de rappel 39 porté par le socle 36, de façon à maintenir sa denture 38 engagée dans le secteur denté 32. Ce coulisseau 37 peut être temporairement rappelé à l'encontre du ressort 39 pour l'écarter du secteur denté 32, par un levier de commande 41 pouvant être actionné par l'occupant du siège lorsqu'il souhaite ajuster l'inclinaison du dossier.

Comme visible sur la figure 3, le levier de commande 41 est porté par l'organe de raccordement 16 en étant lié à celui-ci par une liaison pivot P4 d'axe parallèle à l'axe AT2 et située en avant par rapport à cet axe AT2, cet axe AT2 étant ainsi situé entre la liaison pivot P4 et la poutre 12.

Ce levier de commande 41 comporte un corps 42 sensiblement parallèle au pied 9 et dont la région centrale correspond à la liaison pivot P4. Ce corps 42 est prolongé d'une part par une extrémité supérieure 43 d'actionnement, et d'autre part par une extrémité inférieure 44 s'étendant parallèlement à la poutre 12 en étant en appui sur un plot 46 porté par le coulisseau 37.

Lorsque l'extrémité supérieure 43 est tirée en direction du dossier, c'est-à-dire vers l'arrière, le levier de commande 41 tourne autour de sa liaison pivot P4 dans le sens anti-horaire sur les figures. Dans ces conditions, l'extrémité inférieure 44 s'abaisse en poussant coulisseau 37 vers le bas, par l'intermédiaire du plot 46, à l'encontre du ressort 39 pour désengager la denture 38 du secteur denté 32, de manière à débloquer l'organe de blocage 25, ce qui correspond à la situation de la figure 4.

Partant de la situation de la figure 2 où le dossier est rabattu, c'est-à-dire à une inclinaison minimale, lorsque l'occupant du siège souhaite augmenter l'inclinaison du dossier, il actionne le levier de commande 41 pour dégager la denture 38 du secteur denté 32, et il pousse le dossier 4 avec son dos.

Ceci provoque la rotation du dossier 4 avec le bras 23 dans le sens anti-horaire sur les figures. Durant ce mouvement, l'extrémité avant du bras 23 remonte à l'encontre du ressort 31 en faisant coulisser le chariot 28 vers l'axe AT2 tout en provoquant une rotation de l'organe de blocage 25 dans le sens horaire.

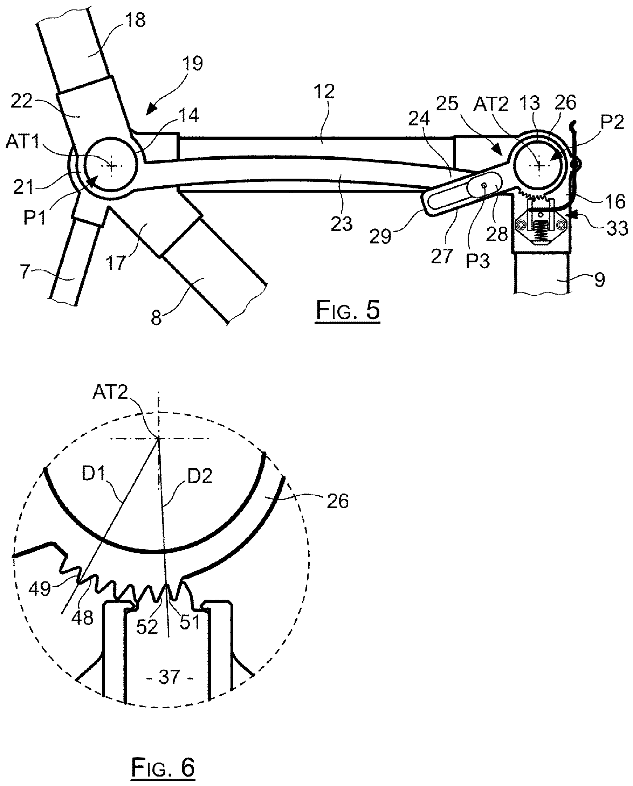

Lorsque ce mouvement est terminé, c'est-à-dire lorsque le dossier 4 a atteint l'inclinaison souhaitée, comme dans la figure 5, le bras 23 est quasiment parallèle à la poutre 12, et l'organe de blocage 25 a pivoté d'environ 30 degrés pour occuper une position proche de l'horizontale. L'occupant du siège peut alors relâcher le levier de commande 41, ce qui provoque la remontée de la denture 38 dans les dents du secteur denté 32 pour assurer le blocage en rotation de l'organe de blocage 25, et par là-même le blocage en rotation du dossier 4 à sa position d'inclinaison maximale.

Pour rabattre le dossier 4, c'est-à-dire le ramener à son inclinaison minimale, l'occupant du siège actionne le levier de commande 41 pour dégager la denture 38 du secteur denté 32, et il avance son dos. Dans cette situation, le ressort de rappel 31 tend à pousser le chariot 28 pour l'éloigner de l'axe AT2, ce qui engendre une rotation du bras 23 avec le dossier 4 dans le sens horaire de manière réduire l'inclinaison du dossier. Le ressort 31 constitue ainsi un moyen de rappel élastique du dossier 4 qui tend à le ramener vers son inclinaison minimale lorsque l'indexeur 33 est désenclenché.

Lorsque le mouvement est terminé, l'occupant du siège relâche le levier de commande 41 pour réengager la denture 38 dans le secteur denté 32 de manière à bloquer l'organe d'ajustement en position, et par là-même le dossier 4 dans sa position courante.

Avantageusement, le levier 41 est tiré par l'intermédiaire d'un câble 47, qui est actionné par un bouton poussoir pouvant être situé à la face interne d'un accoudoir du siège. Dans ce cas, lorsque l'utilisateur presse ce bouton poussoir, il désenclenche l'indexeur 33 afin de pouvoir ajuster l'inclinaison du dossier.

Par ailleurs, les dents du secteur denté 32 et de la denture 38 sont prévues avec des profils asymétriques, de façon à pouvoir ramener le dossier à une inclinaison minimale en poussant sa face arrière sans avoir nécessairement désenclenché l'indexeur 33.

Comme visible sur la figure 6, chaque dent du secteur denté 32 possède une face dite amont 48 qui est la plus éloignée du levier de liaison 27 et une face dite aval 49 qui est la plus proche de ce levier 27. Les faces amont 48 présentent, par rapport à une direction radiale D1 partant de l'axe AT2, une inclinaison plus importante que les faces aval 49.

De manière analogue, chaque dent de la denture 38 comporte une face amont 51 qui est la plus éloignée du levier 27 et une face aval 52 plus proche de ce levier 27. Les faces amont 51 présentent, par rapport à une direction radiale D2 partant de l'axe AT2, une inclinaison plus faible que les faces aval 52.

Comme visible sur la figure 6 chaque face amont 51 de la denture 38 est en vis-à-vis d'une face aval 49 d'une dent du secteur 32, et chaque face aval 52 de la denture 38 est en vis-à-vis d'une face amont 48 du secteur 32.

Ainsi, les faces de dentures en appui les unes sur les autres lorsque la bague 26 tend à tourner dans le sens anti-horaire (réduction de l'inclinaison du dossier), sont plus fortement inclinées par rapport à la direction radiale que celles qui sont en appui les unes sur les autres lorsque la bague 26 tend à tourner dans le sens horaire (augmentation de l'inclinaison du dossier).

Dans ces conditions, lorsque l'occupant du siège s'adosse au dossier, il tend à faire tourner la bague 26 dans le sens horaire sur les figures, de sorte que ce sont les faces de dentures les moins inclinées qui appuient les unes sur les autres, pour assurer une immobilisation efficace du dossier.

Lorsque le siège n'a pas d'occupant, et qu'une personne pousse la face arrière du dossier, il tend à faire tourner la bague 26 dans le sens anti-horaire sur les figures, de sorte que ce sont alors les faces de dentures les plus inclinées qui appuient les unes sur les autres. Dans ces conditions, lorsque l'effort exercé est suffisant, les efforts de friction de ces faces sont vaincus, ce qui permet de provoquer le retrait du coulisseau 37 à l'encontre du ressort 39 afin de permettre au dossier d'être ramené à son inclinaison minimale sans devoir désenclencher manuellement son indexeur.

## Revendications

1. Siège (1) destiné à être fixé au plancher d'un véhicule, comportant une assise (2) intégrant une armature inférieure (6), et un dossier (4) intégrant une armature supérieure (11) liée à l'armature inférieure (6), l'inclinaison de ce dossier (4) étant ajustable entre une inclinaison minimale et une inclinaison maximale, **caractérisé en ce que** ledit siège (1) comprenant :
- une liaison pivot (P1) portée par une poutre transversale arrière (14) de l'armature inférieure (6) et par laquelle l'armature supérieure (11) est liée à l'armature inférieure (6) ;
- un bras (23) rigidement solidaire de l'armature supérieure (11) et comportant une extrémité avant (24) ;
- un organe de blocage (25) de type à crémaillère porté au moins en partie par une poutre transversale avant (13) de l'armature inférieure (6), et pouvant être dans un état enclenché pour bloquer l'extrémité avant (24) à sa position courante ou dans un état désenclenché pour libérer l'extrémité avant (24).

2. Siège (1) selon la revendication 1, dans lequel l'organe de blocage (25) comporte d'une part une bague (26) entourant la poutre transversale avant (13) et portant un levier de liaison (27), ce levier de liaison (27) portant un chariot (28) mobile en translation le long du levier de liaison (27), l'extrémité avant (24) du bras (23) étant liée au chariot (28) par une liaison pivot (P3), et d'autre part un indexeur (33) porté par l'armature inférieure (6) et pouvant être dans un état enclenché pour bloquer en rotation la bague (26) ou dans un état désenclenché pour libérer la bague (26).

3. Siège (1) selon la revendication 2, comprenant des moyens de rappel élastiques du chariot (28) vers une extrémité libre (29) du levier de liaison (27).

4. Siège (1) selon la revendication 2, dans lequel l'indexeur comprend un coulisseau (37) pourvu d'une denture (38), ce coulisseau (37) étant mobile entre une position enclenchée dans laquelle la denture (38) est engrenée dans un secteur denté (32) porté par la bague (26), et une position désenclenchée dans laquelle la denture (38) est dégagée du secteur denté (32).

5. Siège selon la revendication 4, comprenant des moyens de rappel élastiques (39) rappelant le coulisseau (37) vers sa position désenclenchée.

6. Siège selon la revendication 5, dans lequel les dents de la denture (38) du coulisseau (37) et les dents du secteur denté (32) ont des profils de dentures asymétriques dimensionnés pour assurer un blocage de la bague (26) lorsque l'indexeur est enclenché et qu'une poussée est exercée sur le dossier (4) pour augmenter son inclinaison, et pour engendrer un désengagement de l'indexeur (33) lorsqu'une poussée suffisante est exercée sur le dossier (4) pour réduire son inclinaison.

7. Siège selon la revendication 5, comprenant un levier de commande (41) pour désengager temporairement le coulisseau (37) à l'encontre des moyens de rappel élastiques (39).

## Patentansprüche

1. Sitz (1), der dazu bestimmt ist, am Boden eines Fahrzeugs befestigt zu werden, umfassend eine Sitzfläche (2), in die ein unterer Rahmen (6) integriert ist, und eine Rückenlehne (4), in die ein oberer Rahmen (11) integriert ist, der mit dem unteren Rahmen (6) verbunden ist, wobei die Neigung dieser Rückenlehne (4) zwischen einer minimalen Neigung und einer maximalen Neigung verstellbar ist, **dadurch gekennzeichnet, dass** dieser Sitz (1) Folgendes aufweist:
- eine Drehverbindung (P1), die von einem hinteren Querträger (14) des unteren Rahmens (6) getragen wird und über die der obere Rahmen (11) mit dem unteren Rahmen (6) verbunden ist;
- einen Arm (23), der starr fest mit dem oberen Rahmen (11) verbunden ist und ein vorderes Ende (24) umfasst;
- ein Arretierelement (25) vom Zahnstangentyp, das mindestens teilweise von einem vorderen Querträger (13) des unteren Rahmens (6) getragen wird und das in einem eingerückten Zustand sein kann, um das vordere Ende (24) in seiner aktuellen Position zu arretieren, oder in einem ausgerückten Zustand, um das vordere Ende (24) freizugeben.

2. Sitz (1) nach Anspruch 1, wobei das Arretierelement (25) einerseits einen Ring (26), der den vorderen Querträger (13) umgibt und einen Verbindungshebel (27) trägt, wobei diese Verbindungshebel (27) einen Schlitten (28) trägt, der entlang des Verbindungshebels (27) translatorisch bewegbar ist, wobei das vordere Ende (24) des Arms (23) über eine Drehverbindung (P3) mit dem Schlitten (28) verbunden ist, und andererseits einen indexer (33) umfasst, der vom unteren Rahmen (6) getragen wird und der in einem eingerückten Zustand sein kann, um den Ring (26) in Drehung zu arretieren, oder in einem ausgerückten Zustand, um den Ring (26) freizugeben.

3. Sitz (1) nach Anspruch 2, der ein elastisches Rückstellmittel des Schlittens (28) in Richtung eines freien Endes (29) des Verbindungshebels (27) aufweist.

4. Sitz (1) nach Anspruch 2, wobei der indexer einen Schieber (37) aufweist, der mit einer Verzahnung (38) versehen ist, wobei dieser Schieber (37) zwischen einer eingerückten Position, in der die Verzahnung (38) in einen vom Ring (26) getragenen gezahnten Bereich (32) eingreift, und einer ausgerückten Position, in der die Verzahnung (38) vom gezahnten Bereich (32) gelöst sind.

5. Sitz nach Anspruch 4, der ein elastische Rückstellmittel (39) aufweist, das den Schieber (37) in Richtung seiner ausgerückten Position zurückstellt.

6. Sitz nach Anspruch 5, wobei die Zähne der Verzahnung (38) des Schiebers (37) und die Zähne des gezahnten Bereichs (32) asymmetrische Zahnprofile aufweisen, die so dimensioniert sind, dass sie eine Arretierung des Rings (26) sicherstellen, wenn der indexer eingerückt ist und ein Druck auf die Rückenlehne (4) ausgeübt wird, um deren Neigung zu erhöhen, und sie ein Lösen des Indexers (33) bewirken, wenn genügend Druck auf die Rückenlehne (4) ausgeübt wird, um ihre Neigung zu verringern.

7. Sitz nach Anspruch 5, der einen Steuerhebel (41) aufweist, den Schieber (37) gegenüber dem elastischen Rückstellmittel (39) vorübergehend zu lösen.

## Claims

1. Seat (1) intended to be fastened to the floor of a vehicle, including a seat part (2) integrating a lower frame (6), and a backrest (4) integrating an upper frame (11) linked to the lower frame (6), the inclination of this backrest (4) being adjustable between a minimum inclination and a maximum inclination, **characterised in that** said seat (1) comprises:
- a pivot link (P1) carried by a rear transverse beam (14) of the lower frame (6) and by which the upper frame (11) is linked to the lower frame (6);
- an arm (23) rigidly integral with the upper frame (11) and including a front end (24);
- a blocking member (25) of the type having a rack, at least partly carried by a front transverse beam (13) of the lower frame (6), and capable of being in an engaged state to block the front end (24) at its current position or in a disengaged state to free the front end (24).

2. Seat (1) according to claim 1, wherein the blocking member (25) includes on the one hand a ring (26) surrounding the front transverse beam (13) and carrying a linking lever (27), this linking lever (27) carrying a truck (28) mobile in translation along the linking lever (27), the front end (24) of the arm (23) being linked to the truck (28) by a pivot link (P3), and on the other hand an indexer (33) carried by the lower frame (6) and capable of being in an engaged state to block the ring (26) in rotation or in a disengaged state to free the ring (26).

3. Seat (1) according to claim 2, comprising elastic means for return of the truck (28) towards a free end (29) of the linking lever (27).

4. Seat (1) according to claim 2, wherein the indexer comprises a slide (37) provided with toothing (38), this slide (37) being mobile between an engaged position in which the toothing (38) meshes with a toothed sector (32) carried by the ring (26), and a disengaged position in which the toothing (38) is clear of the toothed sector (32).

5. Seat according to claim 4, comprising elastic return means (39) returning the slide (37) towards its disengaged position.

6. Seat according to claim 5, wherein the teeth of the toothing (38) of the slide (37) and the teeth of the toothed sector (32) have asymmetric toothing profiles dimensioned to ensure a blocking of the ring (26) when the indexer is engaged and a thrust is exerted on the backrest (4) to increase its inclination, and to engender a disengagement of the indexer (33) when a sufficient thrust is exerted on the backrest (4) to reduce its inclination.

7. Seat according to claim 5, comprising a control lever (41) to temporarily disengage the slide (37) against the elastic return means (39).
